# EUROPÄISCHE PATENTSCHRIFT

(11) **EP 1 829 343 B1**
(45) Veröffentlichungstag und Bekanntmachung des Hinweises auf die Patenterteilung: **23.07.2014**
(21) Anmeldenummer: 05821383.6
(22) Anmeldetag: 14.12.2005
(51) Int. Cl.: H04M 1/02, H04M 1/725

(54) **MODUL ZUR DATENÜBERTRAGUNG UND PERIPHERIEGERÄT ZUR AUFNAHME DES MODULS**
DATA TRANSMISSION MODULE AND PERIPHERAL DEVICE ACCOMMODATING SAID MODULE
MODULE DE TRANSMISSION DE DONNEES ET APPAREIL PERIPHERIQUE DESTINE A LOGER CE MODULE

(30) Priorität: 21.12.2004 DE 102004062869
(43) Veröffentlichungstag der Anmeldung: 05.09.2007
(73) Patentinhaber: MATHEMA Software GmbH, 91052 Erlangen (DE)
(72) Erfinder: SCHOBBERT, Kai, Rüdiger, D-91054 Erlangen (DE); WIEDEKING, Michael, 91077 Neunkirchen/Brand (DE)
(74) Vertreter: Gassner, Wolfgang
(86) Internationale Anmeldenummer: PCT/EP2005/013441
(87) Internationale Veröffentlichungsnummer: WO 2006/066772

(56) Entgegenhaltungen:
- WO-A-99/22538
- WO-A-03/030572
- WO-A-2004/055635
- WO-A-2005/043826
- US-A1- 2004 005 910
- US-A1- 2004 125 553
- US-A1- 2004 137 935

## Beschreibung

Die Erfindung betrifft ein Modul zur Datenübertragung sowie ein Peripheriegerät zur Aufnahme des Moduls.

Nach dem Stand der Technik sind eine Vielzahl unterschiedlicher Karten bzw. Module zur Verwendung mit Peripheriegeräten, insbesondere Personalcomputern, bekannt. Derartige Module weisen eine in Form eines Steckers ausgebildete Schnittstelle auf und können mit dem Peripheriegerät durch Einstecken in eine dort vorgesehene korrespondierende weitere Schnittstelle zum Datenaustausch miteinander verbunden werden.

Solche Module verleihen einem damit ausgestatteten Peripheriegerät bestimmte zusätzliche Funktionen. Beispielsweise ermöglicht ein GPS-Modul das Senden und Empfangen von Satellitendaten sowie die Bestimmung einer Position auf der Erdoberfläche. Ein GSM- oder ein UMTS-Modul ermöglicht eine drahtlose Datenübermittlung, insbesondere zur Kommunikation mit einem Telekommunikationsnetz, dem Internet oder dgl. Derartige Module bilden lediglich eine Hardware-Erweiterung eines Peripheriegeräts, d. h. sie sind ohne das Peripheriegerät nicht selbstständig funktionsfähig. Zur funktionsgerechten Ankopplung an das Peripheriegerät sind Treiberprogramme erforderlich. Die Stromversorgung solcher Module erfolgt durch das Peripheriegerät.

Des Weiteren sind nach dem Stand der Technik Mobiltelefone, PDA's, MP3-Player und dgl. bekannt. Es handelt sich dabei um Datenverarbeitungseinrichtungen, mit denen persönliche Daten gespeichert werden können. solche Daten können beispielsweise mittels einer IR-Schnittstelle, Bluetooth oder über eine Kabelverbindung an einen Personalcomputer übermittelt werden. Die vorgenannten Geräte verfügen in der Regel über eine eigene Stromversorgung und sind selbstständig, ggf. ohne einen Anschluss an einen Personalcomputer, betreibbar.

Sind beispielsweise auf einem Mobiltelefon oder einem PDA persönliche Daten, sowie Adressen, Rufnummern und dgl., gespeichert, so tritt in der Praxis das Problem der Datensynchronisation auf. D. h. auf einem der Geräte neu eingegebene oder geänderte Daten sind dem anderen Gerät nicht ohne weiteres verfügbar, so dass der Datenbestand in den Geräten sich voneinander unterscheiden kann. Nach dem Stand der Technik sind zwar Programme zur Datensynchronisation bekannt. Insbesondere bei der Verwendung von Geräten verschiedener Hersteller treten jedoch bei der Datensynchronisation in der Praxis immer wieder technische Probleme auf.

Die WO 2004/055635 A2 beschreibt ein Modul zur Datenübertragung mit einer ersten zentralen Prozessoreinheit und einer mit der ersten Prozessoreinheit zusammenwirkenden ersten Speichereinheit sowie einem Betriebssystem. Das bekannte Modul umfasst ferner eine Sende- und Empfangseinheit zum drahtlosen Datenaustausch mit einem Peripheriegerät. In das bekannte Modul kann eine SIM-Karte eingesetzt werden. Die darauf gespeicherten Daten können unter Verwendung des bekannten Moduls beispielsweise über die Sende- und Empfangseinheit zu Synchronisation an ein anderes Peripheriegerät übermittelt werden. Mit dem bekannten Modul ist es allerdings nicht möglich, eine Verbindung zum Datenaustausch mit einem Mobilfunknetz herzustellen.

Zur Benutzung eines mobilen Telekommunikationsnetzes und dgl. muss der Benutzer sich identifizieren. Das geschieht durch Übergabe von Identifikationsdaten, die insbesondere im Falle von Mobiltelefonen fälschungssicher im Speicher einer SIM-Karte gespeichert sind. Insbesondere bei einem Personalcomputer kann es beispielsweise in Folge eines Defekts einer Festplatte dazu kommen, dass diese ausgetauscht, das Betriebssystem neu eingerichtet und infolgedessen auch die Identifikationsdaten neu eingegeben werden müssen. Dabei kann es vorkommen, dass die Identifikationsdaten vom Benutzer verlegt worden sind. Die Beschaffung neuer Identifikationsdaten ist kosten- und zeitaufwändig.

Die WO 2004/006600 A1 offenbart ein Funkmodul, welches sowohl als Modem als auch Modem mit weitergehenden Funktionen in einem Telekommunikationssendegerät verwendet werden kann. Ein dazu vorgesehenes Betriebssystem dient der Konfiguration der Anschlusspins des Modems. Das bekannte Funkmodul ist für sich genommen nicht dazu geeignet, eine Verbindung zum drahtlosen Datenaustausch mit einem mobilen Telekommunikationsnetz herzustellen.

Nach dem Stand der Technik sind Mobiltelefone bekannt, welche mit einer Kamera ausgestattet sind. Die Benutzung solcher Mobiltelefone wird von Unternehmern am Arbeitsplatz im zunehmenden Maße wegen der sich damit eröffnenden Möglichkeiten einer Werksspionage untersagt. Infolgedessen nehmen Arbeitnehmer zur Arbeit häufig Mobiltelefone mit, welche nicht mit einer Kamera ausgestattet sind. Nach Feierabend wechseln sie dann auf ein anderes Mobiltelefon, welches mit einer Kamera ausgestattet ist. Dazu muss jeweils auch die SIM-Karte gewechselt werden. Das Vorhalten mehrerer Mobiltelefone und das Wechseln der SIM-Karte sind kosten- und zeitaufwändig.

Die US 2004/0137935 A1 offenbart ein Modul zur Datenübertragung mit einer ersten zentralen Prozessoreinheit, einer mit der ersten zentralen Prozessoreinheit zusammenwirkenden ersten Speichereinheit mit einem mehrschichtigen Betriebssystem, einer Sende- und Empfangseinheit zum drahtlosen Datenaustausch mit einem, eine Mehrzahl weiterer Sende- und Empfangseinheiten umfassenden Netzwerk, wobei die Sende- und Empfangseinheit ein vorgegebenes Datenübermittlungsprotokoll umfasst, welches in einer zweiten Speichereinheit fälschungssicher gespeicherte Identifikationsdaten zur Identifikation eines Benutzers im Netzwerk erfordert, einer Stromversorgungseinrichtung und einer zur Herstellung einer Steckverbindung geeigneten ersten Schnittstelle zum Anschluss an ein Peripheriegerät.

Die WO 99/22538 A offenbart ein Funkmodul zum Einstecken in ein Peripheriegerät, beispielsweise einen Computer. Das Funkmodul ermöglicht über ein Netzwerk einen Datenaustausch.

Aufgabe der Erfindung ist es, eine möglichst universelle Vorrichtung anzugeben, mit der die Nachteile nach dem Stand der Technik beseitigt werden.

Diese Aufgabe wird durch die Merkmale der Ansprüche 1, 19 und 30 gelöst. Zweckmäßige Ausgestaltungen der Erfindung ergeben sich aus den Merkmalen der Ansprüche 2 bis 18, 20 bis 29 und 31.

Nach Maßgabe der Erfindung ist ein Modul zur Datenübertragung vorgesehen, mit
einer ersten zentralen Prozessoreinheit CPU1,
einer mit der CPU1 zusammenwirkenden ersten Speichereinheit mit einem mehrschichtigen Betriebssystem,
einer ersten Befestigungsvorrichtung zur lösbaren Befestigung der ersten Speichereinheit,
einer Antenne und einer Sende- und Empfangseinheit zum drahtlosen und selbstständigen Datenaustausch mit einem, eine Mehrzahl weiterer Sende- und Empfangseinheiten umfassenden Netzwerk,
wobei die Sende- und Empfangseinheit ein vorgegebenes Datenübermittlungsprotokoll umfasst, welches in einer zweiten Speichereinheit fälschungssicher gespeicherte Identifikationsdaten zur Identifikation eines Benutzers im Netzwerk erfordert,
einer Stromversorgungseinrichtung und
einer zur Herstellung einer Steckverbindung geeigneten ersten Schnittstelle zum Anschluss an ein Peripheriegerät.

Im Sinne der vorliegenden Erfindung wird unter einem "Modul" eine Baueinheit verstanden, die für sich genommen keine Dateneingabe- oder Ausgabevorrichtung, beispielsweise eine Tastatur, ein Display oder dgl. umfasst. Das Modul kann aber lösbar mit einem korrespondierend ausgebildeten Peripheriegerät verbunden werden, das beispielsweise eine Tastatur oder ein Display umfasst.

Unter einem "mehrschichtigen Betriebssystem" wird im Sinne der vorliegenden Erfindung ein Betriebssystem verstanden, welches es dem Benutzer ermöglicht, Einstellungen zu ändern, Daten einzugeben, Daten zu editieren und dgl.. Es wird also eine Benutzeroberfläche bereitgestellt, welche z. B. mit einer benutzerfreundlichen Menüführung ausgestattet ist. Zur Bedienung der Benutzeroberfläche bedarf es lediglich der Kombination des erfindungsgemäßen Moduls mit einem Display und einer Bedienoberfläche, beispielsweise einer Tastatur oder dgl.. Bei dem mehrschichtigen Betriebssystem kann es sich beispielsweise um ein Betriebssystem handeln, welches herkömmlicherweise im Bereich von Mobiltelefonen verwendet wird.

Das vorgeschlagene Modul zur Datenübertragung ist äußerst universell. Es eignet sich beispielsweise in Kombination mit einem einfachen und preisgünstigen, lediglich eine Tastatur, ein Display, ein Mikrofon, einen Lautsprecher und eine Stromversorgungseinrichtung aufweisenden Gehäuse als Mobiltelefon. Das im vorgeschlagenen Modul vorgesehene mehrschichtige Betriebssystem ermöglicht in herkömmlicher Weise die Bedienung des Mobiltelefons sowie das Eingeben, Ändern oder Löschen persönlicher Daten. Die persönlichen Daten können mittels der ersten Speichereinheit im Modul dauerhaft gespeichert werden.

Das Modul kann auch mit anderen Peripheriegeräten kombiniert werden. Beispielsweise kann das Modul mit einem Personalcomputer kombiniert werden, so dass sich dieser zum drahtlosen Senden und Empfangen von Daten eignet. Damit kann auf einfache Weise z. B. eine Verbindung mit dem Internet hergestellt werden.

Das Modul kann auch ohne Anschluss an ein Peripheriegerät selbstständig Daten empfangen oder auch senden. Solche Vorgänge können zu einem späteren Zeitpunkt durch Anschluss an ein Peripheriegerät erkannt werden.

Das Modul, insbesondere die Sende- und Empfangseinheit, umfasst ferner ein Datenübermittlungsprotokoll, welches Identifikationsdaten eines Benutzers im Netzwerk, beispielsweise in einem Mobilfunknetzwerk, erfordert. Dazu kann ein Mittel zum Auslesen der in einer zweiten Speichereinheit fälschungssicher gespeicherten Identifikationsdaten vorgesehen sein. Das Datenübermittlungsprotokoll ermöglicht in Kombination mit dem Identifikationsdaten die Herstellung einer Verbindung zum Netzwerk und damit einen Datenaustausch. Bei dem Mittel zum Auslesen der in der zweiten Speichereinheit fälschungssicher gespeicherten Identifikationsdaten handelt es sich um ein Programm, welches die Identifikationsdaten ausliest und in Kombination mit dem Datenübermittlungsprotokoll eine Verbindung zum Datenaustausch mit dem Netzwerk herstellt.

Nach einer vorteilhaften Ausgestaltung enthält das Modul die zweite Speichereinheit. Die Daten zur Identifikation eines Benutzers können zwar auch auf der ersten Speichereinheit gespeichert sein. Zweckmäßig ist es allerdings, wenn dazu eine besondere zweite Speichereinheit vorgesehen ist. Die zweite Speichereinheit kann lösbar mit dem Modul verbunden sein. Dazu kann eine zweite Schnittstelle zum Anschluss der zweiten Speichereinheit vorgesehen sein. Die zweite Speichereinheit umfasst in diesem Fall eine zur zweiten Schnittstelle korrespondierende dritte Schnittstelle. Die zweite Speichereinheit kann insbesondere Bestandteil einer zur zweiten Schnittstelle korrespondierende dritten Schnittstelle aufweisenden SIM-Karte sein. In diesem Fall ist die zweite Schnittstelle zweckmäßigerweise an einer ersten Aufnahmeeinrichtung zur Aufnahme der SIM-Karte vorgesehen. Die erste Aufnahmeeinrichtung kann ein Mittel zum Halten der SIM-Karte aufweisen. Unter einer SIM-Karte wird eine Karte verstanden, welche zumindest ein "Subscriber Identity Module" bzw. ein Benutzeridentitätsmodul aufweist. Das Benutzeridentitätsmodul umfasst einen Mikrochip, in dem den Benutzer gegenüber einem Netzwerkbetreiber identifizierende Daten gespeichert sind. Die gespeicherten Daten können auch dazu verwendet werden, eine Sprach- oder Datenübertragung zu verschlüsseln. Daneben können auf dem Mikrochip auch persönliche Daten, wie Telefonnummern und dgl., gespeichert werden. Anstelle der SIM-Karte können auch Universal Integrated Circuit Cards (UICC) verwendet werden, die z. B. den Universal Subscriber Identity Modul Standard (USIM-Standard) unterstützen. Dieser Standard erlaubt eine Kombination mehrerer Benutzeridentitätsmodule auf einer SIM-Karte.

Zweckmäßigerweise ist die zweite Schnittstelle an einer ersten Aufnahmeeinrichtung zur Aufnahme der SIM-Karte vorgesehen. Bei der ersten Aufnahmeeinrichtung kann es sich um eine Ausnehmung zum Einlegen der SIM-Karte oder um einen Schlitz zum Einstecken der SIM-Karte handeln. Die erste Aufnahmeeinrichtung kann ein Mittel zum Halten der SIM-Karte aufweisen. Es kann sich dabei um eine Rastvorrichtung, einen verschiebbaren Riegel, einen Verschluss oder dgl. handeln. Es kann auch sein, dass mehrere erste Aufnahmeeinrichtungen zur Aufnahme jeweils einer SIM-Karte vorgesehen sind. Das Vorsehen mehrerer SIM-Karten ermöglicht beispielsweise einen Zugang zu unterschiedlichen Datenübertragungsnetzen, insbesondere Mobilfunknetzen.

Nach einer vorteilhaften Ausgestaltung umfasst das mehrschichtige Betriebssystem eine Schicht mit zumindest einem Treiberprogramm zur Herstellung einer Verbindung mit einem an die erste Schnittstelle angeschlossenen Peripheriegerät. Zweckmäßigerweise sind mehrere Treiberprogramme in der Schicht vorgesehen. Die Treiberprogramme ermöglichen einen Datenaustausch mit einem über die erste Schnittstelle verbundenen Peripheriegerät, beispielsweise einem Display, einer Tastatur oder dgl.. Bei Bedarf können geeignete Treiberprogramme auch nachträglich installiert oder mittels der drahtlosen Datenaustauschverbindung von einem Anbieter, beispielsweise im Internet, heruntergeladen werden. Nach einer weiteren Ausgestaltung umfasst das mehrschichtige Betriebssystem eine weitere Schicht mit zumindest einem Applikationsprogramm. Zweckmäßigerweise ist eine Menüführung zur Auswahl des Applikationsprogramms aus einer Mehrzahl von Applikationsprogrammen vorgesehen. Ferner können Applikationskerne, insbesondere zum Betrieb eines Lautsprechers, Mikrofons, Bildschirms, einer Tastatur, einer Maus, eines Druckers, Schnittstellen sowie sonstigen Peripheriegeräte vorgesehen sein.

Beim Datenübermittlungsprotokoll kann es sich um ein Standardprotokoll, z. B. UMTS, GSM, Bluetooth, W-LAN, IR, AMPS, NMT, HSCSD, GPRS, EDGE und dgl. handeln. Selbstverständlich ist es auch möglich, dass die Sende- und Empfangseinheit mehrere Datenübermittlungsprotokolle umfasst. In diesem Fall ist eine besonders universelle Datenübermittlung möglich. So ist es beispielsweise möglich, dass das Modul bzw. die Sende- und Empfangseinrichtung die folgenden Kombinationen von Daten-übermittlungsprotokollen umfasst:
- UMTS, GSM,
- UMTS, Bluetooth,
- UMTS, Bluetooth, W-LAN, IR.

Unter "UMTS" wird ein universelles mobiles Telekommunikationssystem verstanden. Es handelt sich dabei um eine dritte Generation (3G) der mobilen Kommunikationstechnologie, bei der Datenübertragungsgeschwindigkeiten von bis zu 2 Mbit/s (Mbs) möglich sind.

Unter "GSM" (Global System for Mobile Communication) wird ein globales System für die mobile Kommunikation verstanden. Es handelt sich dabei um den vorherrschenden 2G-Standard digitaler Telekommunikation. Mit dem System wird ermittelt, in welcher Art und Weise mobile Telefone über ein landgestütztes Netzwerk von Sendern/Empfängern miteinander kommunizieren.

Unter "Bluetooth" wird eine Technologie zur Schaffung eines kabellosen Netzwerks mit geringer Reichweite verstanden. Damit können insbesondere kabellose Peripheriegeräte, wie Mikrofone, Drucker, Lautsprecher und dgl. an eine Datenverarbeitungseinrichtung angebunden werden.

Unter "W-LAN" (Wireless Local Area Network) wird ein drahtloses lokales Netzwerk verstanden. Die W-LAN Technologie stellt Hochgeschwindigkeitsdatenverbindungen zwischen mobilen Datenvorrichtungen, wie Laptops, Mobiltelefonen und PDAs und dgl., mit kurzer Reichweite in der Nähe so genannter Wi-Fi Zugangspunkte zur Verfügung. Bei Wi-Fi Zugangspunkten handelt es sich um eine besondere Hardware, welche mit dem kabelgebundenen Netzwerk verbunden ist.

Unter "AMPS" (Advanced Mobil Phone Service) wird der 1 G Standard verstanden, der im 800 bis 900 MHz Frequenzband betrieben wird.

Unter "NMT" (Nordic Mobil Telephone) wird der früheste 1 G Standard verstanden, der im 450 sowie im 900 MHz Band betrieben wird.

Unter "HSCSD" (High Speed Circuit Switched Data) wird eine Datenübertragungstechnologie für GSM verstanden, bei der in einem einzigen Kanal die Datenübertragung bis zu 14,4 Kbps beträgt. Durch Zusammenschaltung von mehreren Kanälen kann die Datenübertragungsrate bis auf 57,6 Kbps gesteigert werden.

Unter "GPRS" (General Paket Radio Service) wird eine Funktechnologie für GSM Netzwerke unter Verwendung Paketgeschalteter Protokolle verstanden.

Unter "EDGE" (Enhanced Data Rates for GSM Evolution) wird eine verbesserte Modulationstechnik verstanden, mit der die Netzwerkkapazität und die Datenraten in GSM Netzwerken erhöht werden können.

Das vorgeschlagene Modul ermöglicht mittels der darin vorgesehenen Sende- und Empfangseinheit die Herstellung eines Kontakts zu einem Netzwerk und damit den Datenaustausch mit dem Netzwerk.

Nach einer vorteilhaften Ausgestaltung ist eine zweite Befestigungsvorrichtung zur lösbaren Befestigung der Sende- und Empfangseinheit vorgesehen. Bei den vorgenannten Befestigungseinrichtungen kann es sich um herkömmliche Sockel zur Aufnahme von die erste Speichereinheit oder die Sende- und Empfangseinheit bildenden Chips handeln. Durch einen Austausch derartiger Chips kann das Modul vom Benutzer ohne Weiteres an neue Anforderungen angepasst werden.

Nach einer weiteren Ausgestaltung ist vorgesehen, dass die Sende- und Empfangseinheit eine zweite zentrale Prozessoreinheit CPU2 umfasst. Das ermöglicht einen besonders raschen Datenaustausch mit einer hohen Geschwindigkeit. Abgesehen davon können die Daten besonders rasch verschlüsselt werden.

Nach einer weiteren Ausgestaltung ist vorgesehen, dass die CPU1, die erste Speichereinheit, ggf. die zweite Speichereinheit, und die Sende- und Empfangseinheit mit einem Polymer vergossen sind. Das macht das vorgeschlagene Modul besonders robust. Es ist damit insbesondere unempfindlich gegen Feuchtigkeit, Stöße und dgl.. Das Modul kann aus einem Stück hergestellt sein, d. h. es bildet eine kompakte Baueinheit an der abgesehen von einer möglicherweise vorgesehenen Haltemittel für eine SIM-Karte keine weiteren Elemente mittels Befestigungsmitteln montiert sind. Als zweckmäßig hat es sich erwiesen, dass das Modul in Form eines Quaders ausgebildet ist, dessen Länge und Breite höchstens 6 cm und dessen Höhe höchstens 1 cm beträgt. Das ermöglicht eine universelle Kombination des Moduls mit verschiedensten Peripheriegeräten.

Das zweckmäßigerweise insoweit aus einem Stück hergestellte Modul kann zumindest abschnittsweise an seiner Außenseite mit einer elektromagnetische Wellen abschirmenden Schicht versehen sein. Das ermöglicht einen störungsfreien Betrieb des Moduls. Es ist insbesondere unempfindlich gegen elektromagnetische Störungen.

Die Stromversorgungseinrichtung kann eine Batterie oder einen Akkumulator umfassen. Das ermöglicht einen aktiven Betrieb des Moduls auch ohne den Anschluss an ein Peripheriegerät. Das Modul kann selbstständig Daten empfangen oder senden. Zu diesem Zweck kann das Modul zweckmäßigerweise mit einer Antenne versehen sein.

Nach einer weiteren vorteilhaften Ausgestaltung ist vorgesehen, dass die erste Schnittstelle in Form eines Steckers ausgebildet ist. Bei dem Stecker handelt es sich vorteilhafterweise um eine Zeile nebeneinanderliegender Kontakte zum Anschluss an ein Peripheriegerät.

Nach weiterer Maßgabe der Erfindung ist ein Peripheriegerät mit einer zur ersten Schnittstelle korrespondierenden vierten Schnittstelle zur Herstellung einer Steckverbindung mit dem erfindungsgemäßen Modul vorgesehen. Das Peripheriegerät ermöglicht über die vierte Schnittstelle einen Datenaustausch mit dem Modul. Das Modul ist mit dem Peripheriegeräts mittels einer Steckverbindung zwischen der ersten Schnittstelle und der vierten Schnittstelle verbunden.

Nach einer Ausgestaltung ist die vierte Schnittstelle in einer zweiten Aufnahmeeinrichtung zur Aufnahme des Moduls vorgesehen. Es kann sich bei der zweiten Aufnahmeeinrichtung um eine Ausnehmung in Form einer Vertiefung oder um einen Schacht zum Einschieben des Moduls handeln.

Nach einer weiteren Ausgestaltung ist die zweite Aufnahmeeinrichtung korrespondierend zum Stecker ausgebildet. D. h. die Aufnahmeeinrichtung ist korrespondierend zur Form des Moduls ausgebildet und weist beispielsweise Nuten, Stege oder Gleitschienen oder dgl. zum Führen des Moduls in eine korrekte Anschlussposition der ersten mit der vierten Schnittstelle auf. In diesem Fall ist das Modul weitgehend formschlüssig in der zweiten Aufnahmeeinrichtung aufgenommen. Nach einer weiteren Ausgestaltung weist die zweite Aufnahmeeinrichtung ein Mittel zum Halten des Moduls auf. Es kann sich dabei um einen Verschluss- oder Rastmechanismus und/oder eine Einrichtung zum Auswerfen des Moduls aus einem Einschubschacht handeln.

Das Peripheriegerät weist zweckmäßigerweise eine weitere Stromversorgungseinrichtung auf. Es kann sich dabei wiederum um eine Batterie oder um einen Akkumulator oder aber auch ein Netzteil handeln. Ferner kann das Peripheriegerät eine weitere Antenne aufweisen. Des Weiteren kann das Peripheriegerät ein Gehäuse mit einer Bedienoberfläche aufweisen. Bei der Bedienoberfläche kann es sich um ein Tastenfeld oder um ein berührungsempfindliches Display handeln, auf dem Funktionen oder Eingaben beispielsweise durch Aufzeichnen oder Berühren mit einem Stab gemacht werden können. Am Gehäuse kann ein, vorzugsweise schwenkbar ausgebildetes, Display vorgesehen sein.

Nach einer besonders vorteilhaften Ausgestaltung ist das Gehäuse nach Art eines Mobiltelefons ausgebildet. Es kann in diesem Fall ein Tastenfeld, ein Display, ein Mikrofon, einen Lautsprecher und eine Stromversorgungseinrichtung umfassen. Alle übrigen Komponenten des Mobiltelefons sind dagegen im erfindungsgemäßen Modul zusammengefasst, welches durch einfaches Einstecken in das Gehäuse zu einem Mobiltelefon kombiniert werden kann. Auf diese Weise können relativ preiswerte Gehäuse für Mobiltelefone bereitgestellt werden. Diese Gehäuse können ohne großen Aufwand mit dem erfindungsgemäßen Modul zu einem Mobiltelefon kombiniert werden. Das ist insbesondere dann von Vorteil, wenn das erfindungsgemäße Modul mit einer leistungsfähigen und kostenaufwändigen Sende- und Empfangseinrichtung, beispielsweise einer UMTS-Sende- und Empfangseinrichtung versehen ist. In diesem Fall kann das erfindungsgemäße Modul zu einem Mobiltelefon kombiniert werden. Es ist aber auch möglich, das Modul zum Anbinden beispielsweise eines Laptop-Computers an das Internet oder ein anderes Datennetz zu verwenden.

Auf dem Modul gespeicherte persönliche Daten müssen nicht mehr synchronisiert werden. Das Modul ist universell und kann die gängigen Vorrichtungen zum Senden und Empfangen von Daten ersetzen. Insoweit ist es auch möglich, dass das Peripheriegerät ein Monitor ist. Durch einen Anschluss einer Tastatur an den Monitor, können Daten gesendet und empfangen werden. Insbesondere ist damit eine Kommunikation beispielsweise mit dem Internet möglich.

Nach einer besonders vorteilhaften weiteren Ausgestaltung ist das Modul mit einer herkömmlichen Buchse zum Anschluss einer Tastatur und/oder einer Maus versehen. Das ermöglicht in Kombination mit einem Monitor eine einfache und komfortable Bedienung des im Modul vorgesehenen mehrschichtigen Betriebssystems.

Zur Kombination des Moduls mit einem Monitor kann das Modul beispielsweise eine VGA-Schnittstelle umfassen. In ähnlicher Weise kann das Modul zur Kombination mit anderen Peripheriegeräten geeignete Schnittstellen, beispielsweise eine IR-Schnittstelle oder dgl., umfassen.

Erfindungsgemäß ist ferner ein Adapter mit einer zur ersten Schnittstelle korrespondierenden vierten Schnittstelle vorgesehen, wobei ein erfindungsgemäßes Modul über eine Steckverbindung zwischen der ersten und der vierten Schnittstelle verbunden ist, und einer siebten als Stecker ausgebildeten Schnittstelle zum Anschluss des Moduls an eine zur siebten Schnittstelle korrespondierend ausgebildeten achten Schnittstelle an einem Peripheriegerät. Bei der achten Schnittstelle kann es sich um eine Standardschnittstelle, beispielsweise eine PCMCIA- oder eine USB-Schnittstelle handeln. Das ermöglicht eine Kommunikation des Moduls mit einem Peripheriegerät über herkömmliche Schnittstellen.

Nachfolgend werden Ausgestaltungen der Erfindung anhand der Zeichnungen näher erläutert. Es zeigen:
- Fig. 1: eine schematische Darstellung der Komponenten des Moduls,
- Fig. 2: eine schematische Darstellung eines mehrschichtigen Betriebssystems,
- Fig. 3: eine erste Ausgestaltung des Moduls,
- Fig. 4: eine zweite Ausgestaltung des Moduls,
- Fig. 5: das Modul gemäß Fig. 4 in Kombination mit einem Mobiltelefon,
- Fig. 6: das Modul gemäß Fig. 4 in Kombination mit einem PDA,
- Fig. 7: das Modul gemäß Fig. 4 in Kombination mit einem ersten Adapter und einem tragbaren Computer und
- Fig. 8: das Modul gemäß Fig. 4 in Kombination mit einem zweiten Adapter.

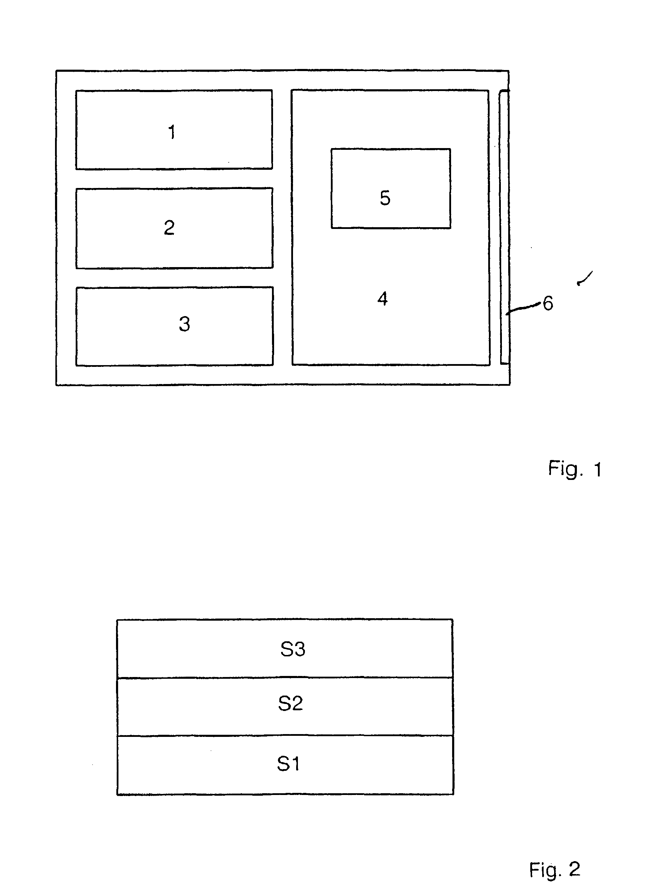

In Fig. 1 ist ein Ausführungsbeispiel des erfindungsgemäßen Moduls schematisch gezeigt. Das Modul umfasst eine zentrale Prozessoreinheit CPU1 1, eine Sende- und Empfangseinheit 2 zum drahtlosen Senden und Empfangen von Daten, eine erste Speichereinheit 3 sowie eine SIM-Einheit 4 mit einer zweiten Speichereinheit 5, die z. B. Bestandteil einer SIM-Karte 7 sein kann. Ferner ist eine erste Schnittstelle 6 vorgesehen.

In der ersten Speichereinheit 3 ist ein mehrschichtiges Betriebssystem gespeichert. Wie insbesondere aus Fig. 2 zu entnehmen ist, weist das mehrschichtige Betriebssystem mehrere Schichten S1, S2 und S3 auf. Eine erste Schicht S1 bildet ein Betriebssystem zur Steuerung der Hardwarekomponenten. Eine zweite Schicht S2 bildet eine Serviceebene, die für den Benutzer üblicherweise nicht zugänglich ist. Sie ermöglicht eine Anpassung des Betriebssystems an die jeweils verwendeten Hardwarekomponenten. Eine dritte Schicht S3 stellt schließlich eine Benutzeroberfläche bereit, mit der ein Benutzer Daten eingeben, löschen oder ändern und Einstellungen am Betriebssystem vornehmen kann. Die Benutzeroberfläche weist in der Regel eine Menüführung auf, welche eine Bedienung für den Benutzer erleichtert.

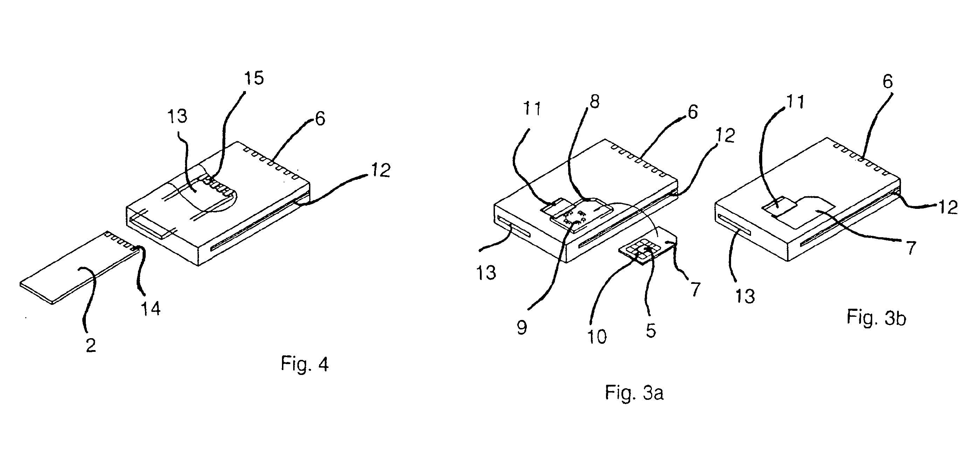

Die Fig. 3a und 3b zeigen in perspektivischer Ansicht eine erste Ausgestaltung eines Moduls. Dabei ist die zweite Speichereinheit 5 auf einer SIM-Karte 7 vorgesehen. Das Modul weist eine zur Form der SIM-Karte 7 korrespondierende Ausnehmung 8 auf. In der Ausnehmung 8 ist eine zweite Schnittstelle 9 zum Anschluss einer auf der SIM-Karte 7 korrespondierend ausgebildeten dritten Schnittstelle 10 vorgesehen. Wie insbesondere in Zusammensicht mit Fig. 3b ersichtlich ist, wird die SIM-Karte 7 durch einen verschiebbaren Riegel 11 in der Ausnehmung 8 gehalten.

Das Modul weist die Form eines flachen Quaders mit einer Höhe von höchstens 1 cm auf. An der Längsseite sind Führungsnuten 12 vorgesehen. Wie insbesondere in Zusammensicht mit Fig. 4 deutlich wird, erstreckt sich von einer Frontseite ein erster Schacht 13 zum Einstecken einer, beispielsweise die Sende- und Empfangseinheit 2 oder die erste Speichereinheit 13 bildenden Karte. Eine mit dem Bezugszeichen 14 bezeichnete fünfte Schnittstelle des korrespondierend ausgebildet zu einer mit dem Bezugszeichen 15 bezeichneten und im ersten Schacht 13 vorgesehenen sechsten Schnittstelle. Indem beispielsweise die Sende- und Empfangseinheit 2 auswechselbar auf einer Karte vorgesehen ist, kann das erfindungsgemäße Modul schnell und einfach an die jeweiligen Bedürfnisse des Benutzers angepasst werden. Die Karte kann beispielsweise eine UMTS, eine GSM, Bluetooth oder ähnliche Sende- und Empfangseinheit 2 umfassen.

Im in Fig. 4 gezeigten zweiten Ausführungsbeispiel ist die zweite Speichereinheit 5 nicht Bestandteil einer SIM-Karte 7. Sie ist hier in das Modul integriert.

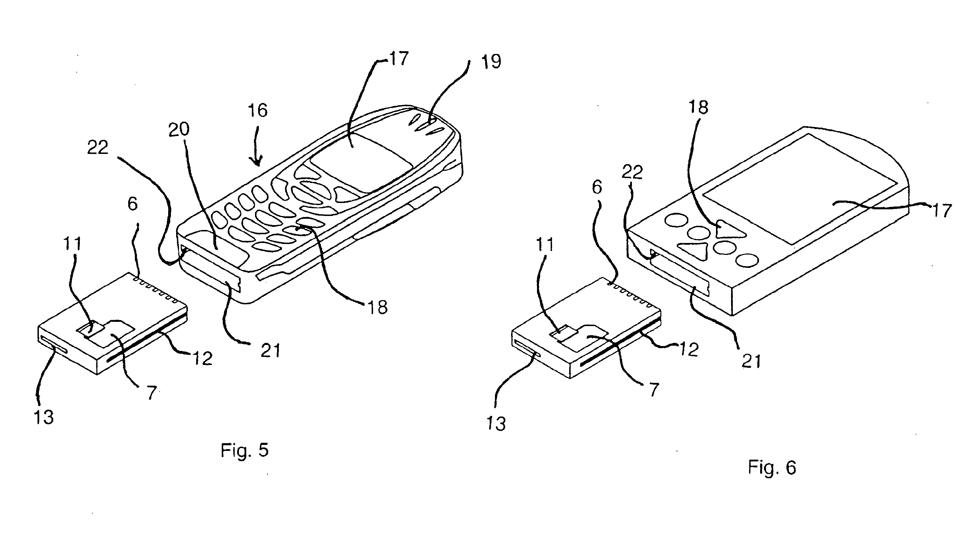

Fig. 5 zeigt in perspektivischer Ansicht ein erstes Peripheriegerät, nämlich ein Gehäuse 16 für ein Mobiltelefon. Das Gehäuse 16 ist versehen mit einem Display 17, einem Tastenfeld 18, einem Lautsprecher 19, einem Mikrofon 20 sowie einem zweiten Schacht 21, welcher korrespondierend zur äußeren Form des Moduls ausgebildet ist. Der zweite Schacht 21 weist insbesondere zu den Führungsnuten 12 korrespondierend ausgebildete Führungsschienen 22 auf. Im zweiten Schacht 21 ist eine (hier nicht gezeigte) zur ersten Schnittstelle 6 korrespondierende zweite Schnittstelle 9 vorgesehen. Bei vollständig in den zweiten Schacht 21 eingeschobenem Modul wird eine elektrische Verbindung zwischen den Kontakten der ersten

Schnittstelle 6 und der zweiten Schnittstelle 9 hergestellt. Zum Halten des Moduls innerhalb des zweiten Schachts 21 können hier nicht näher gezeigte Rast- oder Verriegelungsmittel vorgesehen sein.

In Fig. 6 ist in perspektivischer Ansicht ein zweites Peripheriegerät gezeigt. Es handelt sich dabei um ein PDA, welches ebenfalls ein Tastenfeld 18 und ein Display 17 aufweist. Auch hier ist der zweite Schacht 21 identisch ausgebildet zu dem zweiten Schacht 21 bei dem in Fig. 5 gezeigten ersten Peripheriegerät.

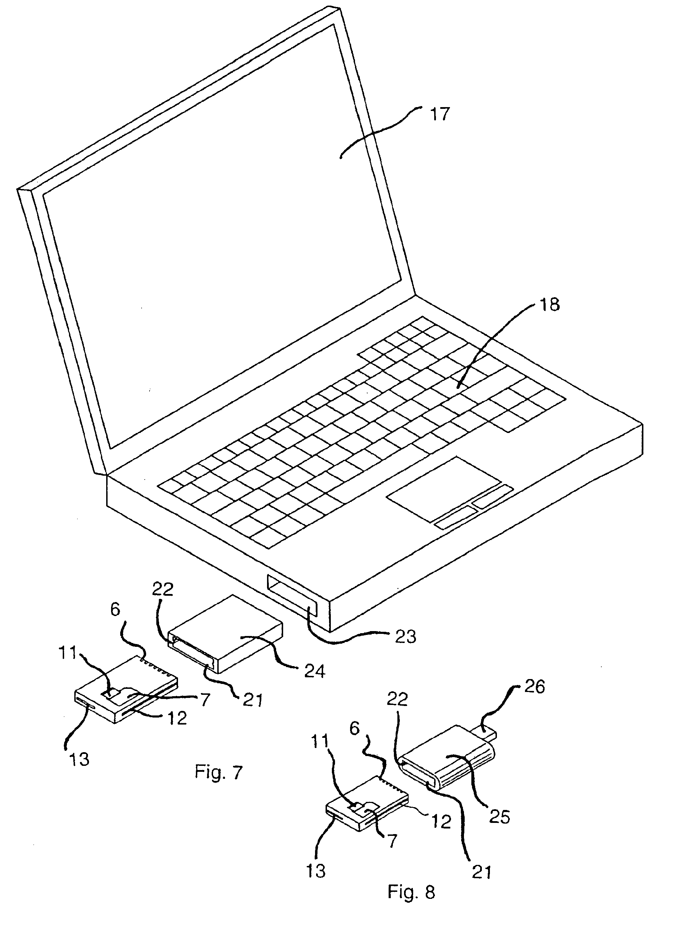

Fig. 7 zeigt in perspektivischer Ansicht ein drittes Peripheriegerät, nämlich einen tragbaren Computer bzw. Laptop-Computer. Eine üblicherweise an einem solchen Computer vorgesehene Schnittstelle, beispielsweise eine PCMCIA-Schnittstelle, kann mittels eines geeigneten ersten Adapters 24 zur Aufnahme des erfindungsgemäßen Moduls dienen. Der erste Adapter 24 weist wiederum den zweiten Schacht 21, die Führungsschienen 22 sowie die (hier nicht gezeigte) zweite Schnittstelle 9 auf. Ferner weist der erste Adapter 24 eine (hier nicht gezeigte) siebte Schnittstelle auf, mit der es an eine dazu korrespondierende im dritten Schacht 23 vorgesehene achte Schnittstelle der PCMCIA-Schnittstelle verbunden werden kann.

Wie aus Fig. 8 gezeigt ist, kann das erfindungsgemäße Modul aber auch beispielsweise mit einer USB-Schnittstelle verbunden werden. Dazu ist ein entsprechend ausgestalteter zweiter Adapter 25 mit einem Stecker 26 zum Anschluss an eine USB-Schnittstelle vorgesehen.

Wie aus den vorstehenden Ausführungsbeispielen sich ergibt, kann das vorgeschlagene Modul universell mit den verschiedensten Peripheriegeräten zusammenwirken. Es verleiht dem Peripheriegerät nicht nur die Funktion eines drahtlosen Sendens und Empfangens von Daten, sondern stellt auch ein mehrschichtiges Betriebssystem zu Verfügung, welches u.a. eine Steuerung ermöglicht. Zur Bedienung des Moduls durch einen Benutzer ist es lediglich erforderlich, das Modul mit einer Bedienoberfläche, beispielsweise einem Tastenfeld 18 und einem Display 17, zu kombinieren.

Das Modul kann mit einer wiederaufladbaren Stromversorgungseinrichtung versehen sein. Zum Aufladen der Stromversorgungseinrichtung kann ein entsprechender Anschluss für ein Ladegerät vorgesehen sein. Abgesehen davon, kann das Modul auch mit Anschlüssen für eine Tastatur oder eine Maus versehen sein. In diesem Fall kann das Modul beispielsweise mit einem als weiterem Peripheriegerät vorgesehenen Flachbildschirm kombiniert werden und durch Anschluss einer Tastatur und/oder einer Maus lässt sich die Kombination aus Modul und Peripheriegerät bedienen.

Sofern das Modul mit einer Stromversorgungseinrichtung ausgestattet ist, kann es auch ohne Anschluss an ein Peripheriegerät selbstständig Daten senden und empfangen. So kann das Modul beispielsweise SMS-Nachrichten, Sprachnachrichten oder dgl. empfangen und speichern. Desgleichen ist es auch denkbar, dass das Modul in Kombination mit geeigneten Sensoren zur Überwachung von Körperfunktionen eines Benutzers eingesetzt wird. Falls bestimmte Körperfunktionen einen vorgegebenen kritischen Wert erreichen, kann beispielsweise automatisch ein Senden von Daten an eine entfernte Empfangseinrichtung erfolgen, auf der ein entsprechender Alarm angezeigt wird. Damit kann ein schlechter körperlicher Zustand eines das Modul mitführenden Benutzers erkannt werden. In Kombination mit einer GPS-Sende- und Empfangseinheit 2 kann zusätzlich die Position des Benutzers ermittelt und so schnell Hilfe geleistet werden.

## Patentansprüche

1. Modul zur Datenübertragung mit
einer ersten zentralen Prozessoreinheit CPU1 (1),
einer mit der CPU1 (1) zusammenwirkenden ersten Speichereinheit (3) mit einem mehrschichtigen Betriebssystem (S1, S2, S3),
einer ersten Befestigungsvorrichtung zur lösbaren Befestigung der ersten Speichereinheit (3),
einer Antenne und einer Sende- und Empfangseinheit (2) zum drahtlosen und selbstständigen Datenaustausch mit einem, eine Mehrzahl weiterer Sende- und Empfangseinheiten umfassenden Netzwerk,
wobei die Sende- und Empfangseinheit (2) ein vorgegebenes Datenübermittlungsprotokoll umfasst, welches in einer zweiten Speichereinheit (5) fälschungssicher gespeicherte Identifikationsdaten zur Identifikation eines Benutzers im Netzwerk erfordert,
einer Stromversorgungseinrichtung und
einer zur Herstellung einer Steckverbindung geeigneten ersten Schnittstelle (6) zum Anschluss an ein Peripheriegerät.

2. Modul nach Anspruch 1, enthaltend die zweite Speichereinheit (5).

3. Modul nach einem der vorhergehenden Ansprüche, wobei eine zweite Schnittstelle (9) zum Anschluss der zweiten Speichereinheit (5) vorgesehen ist.

4. Modul nach einem der vorhergehenden Ansprüche, wobei die zweite Speichereinheit (5) Bestandteil einer SIM-Karte (7) ist, welche eine zur zweiten Schnittstelle (9) korrespondierende dritten Schnittstelle (10) aufweist.

5. Modul nach einem der vorhergehenden Ansprüche, wobei die zweite Schnittstelle (9) an einer ersten Aufnahmeeinrichtung (8) zur Aufnahme der SIM-Karte (7) vorgesehen ist.

6. Modul nach einem der vorhergehenden Ansprüche, wobei die erste Aufnahmeeinrichtung (8) ein Mittel (11) zum Halten der SIM-Karte (7) aufweist.

7. Modul nach einem der vorhergehenden Ansprüche, wobei das mehrschichtige Betriebssystem (S1, S2, S3) eine Schicht mit zumindest einem Treiberprogramm zur Herstellung einer Verbindung mit einem an die erste Schnittstelle (6) angeschlossenen Peripheriegeräte umfasst.

8. Modul nach einem der vorhergehenden Ansprüche, wobei das mehrschichtige Betriebssystem (S1, S2, S3) eine weitere Schicht mit zumindest einem Applikationsprogramm umfasst.

9. Modul nach einem der vorhergehenden Ansprüche, wobei eine Menüführung zur Auswahl des Applikationsprogramms aus einer Mehrzahl von Applikationsprogrammen vorgesehen ist.

10. Modul nach einem der vorhergehenden Ansprüche, wobei das Datenübermittlungsprotokoll einem aus der folgenden Gruppe ausgewählten Standardprotokoll entspricht: UMTS, GSM, Bluetooth, W-LAN, IR, AMPS, NMT, HSCSD, GPRS, EDGE.

11. Modul nach einem der vorhergehenden Ansprüche, wobei eine zweite Befestigungsvorrichtung zur lösbaren Befestigung der Sende- und Empfangseinheit (2) vorgesehen ist.

12. Modul nach einem der vorhergehenden Ansprüche, wobei die Sende- und Empfangseinheit (2) eine zweite zentrale Prozessoreinheit CPU2 umfasst.

13. Modul nach einem der vorhergehenden Ansprüche, wobei die CPU1 (1), die erste Speichereinheit (3), ggf. die zweite Speichereinheit (5), und die Sende- und Empfangseinheit (2) mit einem Polymer vergossen sind.

14. Modul nach einem der vorhergehenden Ansprüche, wobei es im Form eines Quaders ausgebildet ist, dessen Länge und Breite höchstens 6 cm und dessen Höhe höchstens 1 cm beträgt.

15. Modul nach einem der vorhergehenden Ansprüche, wobei das Modul zumindest abschnittsweise an seiner Außenseite mit einer elektromagnetische Wellen abschirmenden Schicht versehen ist.

16. Modul nach einem der vorhergehenden Ansprüche, wobei es aus einem Stück hergestellt ist.

17. Modul nach einem der vorhergehenden Ansprüche, wobei die Stromversorgungseinrichtung eine Batterie oder einen Akkumulator umfasst.

18. Modul nach einem der vorhergehenden Ansprüche, wobei die erste Schnittstelle (6) in Form eines Steckers (26) ausgebildet ist.

19. Peripheriegerät mit einer zur ersten Schnittstelle (6) korrespondierenden vierten Schnittstelle, wobei ein Modul nach einem der vorhergehenden Ansprüche mittels einer Steckverbindung zwischen der ersten Schnittstelle (6) und der vierten Schnittstelle verbunden ist.

20. Peripheriegerät nach Anspruch 19, wobei die vierte Schnittstelle an einer zweiten Aufnahmeeinrichtung (21) zur Aufnahme des Moduls vorgesehen ist.

21. Peripheriegerät nach Anspruch 20, wobei die zweite Aufnahmeeinrichtung (21) korrespondierend zum Stecker (26) ausgebildet ist.

22. Peripheriegerät nach einem der Ansprüche 20 oder 21, wobei die zweite Aufnahmeeinrichtung (21) ein Mittel zum Halten des Moduls aufweist.

23. Peripheriegerät nach einem der Ansprüche 19 bis 23, wobei es eine weitere Stromversorgungseinrichtung aufweist.

24. Peripheriegerät nach Anspruch 23, wobei die weitere Stromversorgungseinrichtung eine Batterie oder einen Akkumulator umfasst.

25. Peripheriegerät nach einem der Ansprüche 19 bis 24, wobei es eine weitere Antenne aufweist.

26. Peripheriegerät nach einem der Ansprüche 19 bis 25, wobei es ein Gehäuse (16) aufweist.

27. Peripheriegerät nach Anspruch 26, wobei am Gehäuse (16) ein, vorzugsweise schwenkbar ausgebildetes, Display (17) und/oder eine Bedienoberfläche (18) vorgesehen ist/sind.

28. Peripheriegerät nach einem der Ansprüche 26 oder 27, wobei das Gehäuse (16) nach Art eines Mobiltelefons ausgebildet ist.

29. Peripheriegerät nach einem der Ansprüche 19 bis 28, wobei das Peripheriegerät ein Computer oder ein Monitor ist.

30. Adapter mit einer zur ersten Schnittstelle (6) korrespondierenden vierten Schnittstelle, wobei ein Modul nach einem der Ansprüche 1 bis 18 über eine Steckverbindung zwischen der ersten und der vierten Schnittstelle verbunden ist, und einer siebten als Stecker (26) ausgebildeten Schnittstelle zum Anschluss des Moduls an eine zur siebten Schnittstelle (26) korrespondierend ausgebildeten achten Schnittstelle an einem Peripheriegerät.

31. Adapter nach Anspruch 30, wobei die achte Schnittstelle eine PCMCIA- oder USB-Schnittstelle ist.

## Claims

1. Module for data transmission with
a first central processor unit CPU1 (1),
a first memory unit (3) working together with the CPU1 (1) with a multi-layer operating system (S1, S2, S3),
a first mounting device for detachable mounting of the first memory unit (3),
an antenna and a transmitting and receiving unit (2) for wireless and independent data exchange with a network comprising a plurality of further transmitting and receiving units,
wherein the transmitting and receiving unit (2) comprises a specified data transmission protocol which requires identification data stored forgery-proof in a second memory unit (5) for the identification of a user in the network,
a power supply unit and
a first interface (6) suitable for the establishment of a plug connection for connection to a peripheral device.

2. Module as defined in claim 1, containing the second memory unit (5).

3. Module as defined in one of the preceding claims, wherein a second interface (9) is provided for the connection of the second memory unit (5).

4. Module as defined in one of the preceding claims, wherein the second memory unit (5) is part of a SIM card (7) which has a third interface (10) corresponding to the second interface (9).

5. Module as defined in one of the preceding claims, wherein the second interface (9) is provided on a first holder device (8) for holding the SIM card (7).

6. Module as defined in one of the preceding claims, wherein the first holder device (8) has a means (11) of retaining the SIM card (7).

7. Module as defined in one of the preceding claims, wherein the multi-layer operating system (S1, S2, S3) comprises one layer with at least one driver program for the establishment of a connection with a peripheral device connected to the first interface (6).

8. Module as defined in one of the preceding claims, wherein the multi-layer operating system (S1, S2, S3) comprises a further layer with at least one application program.

9. Module as defined in one of the preceding claims, wherein menu navigation is provided for the selection of the application program from a plurality of application programs.

10. Module as defined in one of the preceding claims, wherein the data transmission protocol corresponds to a standard protocol selected from the following group: UMTS, GSM, Bluetooth, W-LAN, IR, AMPS, NMT, HSCSD, GPRS, EDGE.

11. Module as defined in one of the preceding claims, wherein a second mounting device is provided for the detachable mounting of the transmitting and receiving unit (2).

12. Module as defined in one of the preceding claims, wherein the transmitting and receiving unit (2) comprises a second central processor unit CPU2.

13. Module as defined in one of the preceding claims, wherein the CPU1 (1), the first memory unit (3), if necessary the second memory unit (5), and the transmitting and receiving unit (2) are cast with a polymer.

14. Module as defined in one of the preceding claims, wherein it is formed in the shape of a cuboid whose length and width is a maximum of 6 cm and whose height is a maximum of 1 cm.

15. Module as defined in one of the preceding claims, wherein the module is provided with a coating for shielding from electromagnetic waves at least in sections on its exterior side.

16. Module as defined in one of the preceding claims, wherein it is made from one piece.

17. Module as defined in one of the preceding claims, wherein the power supply device comprises a battery or a rechargeable battery.

18. Module as defined in one of the preceding claims, wherein the first interface (6) is formed in the shape of a plug connector (26).

19. Peripheral device with a fourth interface corresponding to the first interface (6), wherein a module according to one of the preceding claims is connected by a plug connection established between the first interface (6) and the fourth interface.

20. Peripheral device as defined in claim 19, wherein the fourth interface is provided on a second holder device (21) for holding the module.

21. Peripheral device as defined in claim 20, wherein the second holder device (21) is formed corresponding to the plug connector (26).

22. Peripheral device as defined in one of the claims 20 or 21, wherein the second holder device (21) has a means for retaining the module.

23. Peripheral device as defined in one of the claims 19 to 23, wherein it has a further power supply device.

24. Peripheral device as defined in claim 23, wherein the further power supply device comprises a battery or a rechargeable battery.

25. Peripheral device as defined in one of the claims 19 to 24, wherein it has a further antenna.

26. Peripheral device as defined in one of the claims 19 to 25, wherein it has a housing (16).

27. Peripheral device as defined in claim 26, wherein a preferably swivel display (17) and/or a user interface (18) is/are provided on the housing (16).

28. Peripheral device as defined in one of the claims 26 or 27, wherein the housing (16) is formed like a mobile telephone.

29. Peripheral device as defined in one of the claims 19 to 28, wherein the peripheral device is a computer or a monitor.

30. Adapter with a fourth interface corresponding to the first interface (6), wherein a module according to one of claims 1 to 18 is connected by a plug connection established between the first and the fourth interface, and a seventh interface (26) formed as a plug connector for the connection of the module to an eighth interface corresponding to the seventh interface (26) on a peripheral device (16, 18).

31. Adapter as defined in claim 30, wherein the eighth interface is a PCMCIA or USB interface.

## Revendications

1. Module de transmission de données comprenant
une première unité centrale de traitement CPU1 (1),
une première unité de mémoire (3) fonctionnant en interaction avec la CPU1 (1) avec un système d'exploitation multicouche (S1, S2, S3),
un premier dispositif de fixation pour la fixation amovible de la première unité de mémoire (3),
une antenne et une unité d'émission et de réception (2) pour l'échange de données sans fil et autonome avec un réseau comportant une pluralité d'autres unités d'émission et de réception,
où l'unité d'émission et de réception (2) comporte un protocole de transmission de données prédéfini qui requiert des données d'identification mémorisées de manière infalsifiable dans une deuxième unité de mémoire (5) destinées à l'identification d'un utilisateur dans le réseau,
un dispositif d'alimentation en courant et
une première interface (6) appropriée pour la réalisation d'une connexion enfichable pour le raccordement à un périphérique.

2. Module selon la revendication 1, comprenant la deuxième unité de mémoire (5).

3. Module selon l'une des revendications précédentes, où une deuxième interface (9) est prévue pour le raccordement de la deuxième unité de mémoire (5).

4. Module selon l'une des revendications précédentes, oùla deuxième unité de mémoire (5) est partie intégrante d'une carte SIM (7) laquelle présente une troisième interface (10) correspondant à la deuxième interface (9).

5. Module selon l'une des revendications précédentes, où la deuxième interface (9) est prévue sur un premier dispositif de réception (8) pour la réception de la carte SIM (7).

6. Module selon l'une des revendications précédentes, où le premier dispositif de réception (8) présente un moyen (11) pour maintenir la carte SIM (7).

7. Module selon l'une des revendications précédentes, où le système d'exploitation multicouche (S1, S2, S3) comporte une couche avec au moins un programme pilote pour la réalisation d'une connexionà un périphérique raccordé à la première interface (6).

8. Module selon l'une des revendications précédentes, où le système d'exploitation multicouche (S1, S2, S3) comporte une autre couche avec au moins un programme d'application.

9. Module selon l'une des revendications précédentes, où une commande par menu est prévue pour la sélection du programme d'application à partir d'une pluralité de programmes d'application.

10. Module selon l'une des revendications précédentes, où le protocole de transmission de données correspond à un protocole standard sélectionné à partir du groupe suivant: UMTS, GSM, Bluetooth, W-LAN, IR, AMPS, NMT, HSCSD, GPRS, EDGE.

11. Module selon l'une des revendications précédentes, où un deuxième dispositif de fixation est prévu pour la fixation amovible de l'unité d'émission et de réception (2).

12. Module selon l'une des revendications précédentes, où l'unité d'émission et de réception (2) comporte une deuxième unité centrale de traitement CPU2.

13. Module selon l'une des revendications précédentes, où la CPU1 (1), la première unité de mémoire (3), le cas échéant, la deuxième unité de mémoire (5) et l'unité d'émission et de réception (2) sont scellées avec un polymère.

14. Module selon l'une des revendications précédentes, où il est réalisé sous forme d'un parallélépipède dont la longueur et la largeur sont au maximum de 6 cm et sa hauteur maximale est égale à 1 cm.

15. Module selon l'une des revendications précédentes, où le module comporte tout au moins section par section sur sa face extérieure une couche de blindage contre des ondes électromagnétiques.

16. Module selon l'une des revendications précédentes, où il est réalisé en une pièce.

17. Module selon l'une des revendications précédentes, où le dispositif d'alimentation en courant comporte une batterie ou un accumulateur.

18. Module selon l'une des revendications précédentes, où la première interface (6) est réalisée sous forme d'un connecteur (26).

19. Périphérique comportant une quatrième interface correspondant à la première interface (6), où un module selon l'une des revendications précédentesest relié par l'intermédiaire d'une connexion enfichable entre la première interface (6) et la quatrième interface.

20. Périphérique selon la revendication 19, où la quatrième interface est prévue sur un deuxième dispositif de réception (21) pour la réception du module.

21. Périphérique selon la revendication 20, où le deuxième dispositif de réception (21) est réalisé de manière à correspondre au connecteur (26).

22. Périphérique selon l'une des revendications 20 ou 21, où le deuxième dispositif de réception (21) présente un moyen pour maintenir le module.

23. Périphérique selon l'une des revendications 19 à 23, oùil présente un autre dispositif d'alimentation en courant.

24. Périphérique selon la revendication 23, où l'autre dispositif d'alimentation en courant comporte une batterie ou un accumulateur.

25. Périphérique selon l'une des revendications 19 à 24, où il présente une autre antenne.

26. Périphérique selon l'une des revendications 19 à 25, où il présente un boîtier (16).

27. Périphérique selon la revendication 26, où un écran (17), de préférence réalisé de manière à pouvoir pivoter, et/ou une interface utilisateur (18) est /sont prévu(s) sur le boîtier (16).

28. Périphérique selon l'une des revendications 26 ou 27, où le boîtier (16) est réalisé sous forme d'un téléphone portable.

29. Périphérique selon l'une des revendications 19 à 28, où le périphérique est un ordinateur ou un moniteur.

30. Adaptateur comportant une quatrième interface correspondant à la première interface (6), où un module selon l'une des revendications 1 à 18 est relié par l'intermédiaire d'une connexion enfichable entre la première et la quatrième interface, et une septième interface réalisée sous forme de connecteur (26) pour le raccordement du module à une huitième interface réalisée de manière à correspondre à la septième interface (26) à un périphérique.

31. Adaptateur selon la revendication 30, où la huitième interface est une interface PCMCIA ou USB.
